# EUROPEAN PATENT APPLICATION

(11) **EP 4 319 347 A1**
(43) Date of publication of application: **07.02.2024**
(21) Application number: 21934122.9
(22) Date of filing: 02.04.2021
(51) Int. Cl.: H04W 68/00

(54) **PAGING REJECTION METHOD, APPARATUS, AND DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN); HONG, Wei, Beijing 100085 (CN)
(74) Representative: dompatent von Kreisler Selting Werner - Partnerschaft von Patent- und Rechtsanwälten mbB
(86) International application number: PCT/CN2021/085436
(87) International publication number: WO 2022/205466

(57) **Abstract**

A paging rejection method, apparatus, and device, and a storage medium, which relate to the field of mobile communications. The method comprises: when in a communication state, receiving a paging message sent by a network device; on the basis of multi-card capability information of the network device and the paging message, sending to the network device a response rejection message corresponding to the paging message, the multi-card capability information being used to indicate whether the network device supports a multi-card capability; and determining, on the basis of whether the network device supports the multi-card capability, to reject the paging message sent by the network device. Thus, the situation of whether a network device supports a multi-card capability is fully considered, thereby improving the accuracy of a terminal rejecting a paging message.

## Description

### TECHNICAL FIELD

The disclosure relates to the field of mobile communication technologies, in particularly, to a method and an apparatus for rejecting a paging, a device and a storage medium.

### BACKGROUND

With rapid development of mobile communication technologies and continuous improvement of user needs, more and more terminals support a multi-card capability, which refers to a capability of terminals supporting communication using a plurality of cards.

In a case where a terminal and a network device both support the multi-card capability, in response to the first card being in a communication state with the network device while the second card is an idle state, the terminal receives a paging message and a paging cause through the second card, and the terminal determines whether to respond the paging message based on the communication state of the first card and the paging cause.

However, due to some network devices not supporting the multi-card capability, when the terminal moves within a coverage range of a network device that do not support the multi-card capability, the network device will not send the paging message carrying the paging cause to the terminal, resulting in low accuracy of the terminal in responding to the paging message.

### SUMMARY

Embodiments of the disclosure provide a method and an apparatus for rejecting a paging, a device and a storage medium, fully considering a situation of whether a network device supports a multi-card capability, and improving accuracy of a terminal rejecting a paging message. The technical solution is described below.

According to an aspect of the present disclosure, there is provided a method for rejecting a paging, applicable for a terminal. The method includes:
receiving a paging message sent by a network device in a case of being in a communication state; and
sending a rejection response message corresponding to the paging message to the network device based on multi-card capability information and the paging message of the network device, in which, the multi-card capability information is configured to indicate whether the network device supports a multi-card capability.

According to an aspect of the present disclosure, there is provided a method for rejecting a paging, applicable for a network device. The method includes:
sending a paging message to a terminal in a case of the terminal being in a communication state, in which the terminal supports a multi-card capability; and
receiving a rejection response message corresponding to the paging message sent by the terminal, in which the rejection response message is determined by the terminal based on multi-card capability information of the network device and the paging message, the multi-card capability information is configured to indicate whether the network device supports the multi-card capability.

According to an aspect of the present disclosure, there is provided an apparatus for rejecting a paging, applicable for a terminal. The apparatus includes:
a receiving module, configured to receive a paging message sent by a network device in a case of the terminal being in a communication state; and
a sending module, configured to send a rejection response message corresponding to the paging message to the network device based on multi-card capability information and the paging message of the network device, in which the multi-card capability information is configured to indicate whether the network device supports a multi-card capability.

According to an aspect of the present disclosure, there is provided an apparatus for rejecting a paging, applicable for a network device. The apparatus includes:
a sending module, configured to send a paging message to a terminal in a case of the terminal being in a communication state, in which the terminal supports a multi-card capability; and
a receiving module, configured to receive a rejection response message corresponding to the paging message sent by the terminal, in which the rejection response message is determined by the terminal based on multi-card capability information of the network device and the paging message, the multi-card capability information is configured to indicate whether the network device supports the multi-card capability.

According to an aspect of embodiments of the disclosure, a terminal is provided. The terminal includes: a processor; a transceiver coupled with the processor; and a memory for storing program codes executable by the processor; in which the processor is configured to load and execute the program codes to implement the method for rejecting the paging as described in the above aspects.

According to an aspect of embodiments of the disclosure, a network device is provided. The terminal includes: a processor; a transceiver coupled with the processor; and a memory for storing program codes executable by the processor; in which the processor is configured to load and execute the program codes to implement the method for rejecting the paging as described in the above aspects.

According to an aspect of embodiments of the disclosure, a computer-readable storage medium having executable program codes stored thereon is provided. When the executable program codes are loaded and executed by a processor, the method for rejecting the paging as described in the above aspects is implemented.

According to an aspect of embodiments of the disclosure, a chip is provided. The chip includes programmable logic circuits and/or program instructions, and is configured to implement the method for rejecting the paging as described in the above aspects when running on a terminal or a network device.

According to an aspect of embodiments of the disclosure, a computer program product is provided. The computer program product is configured to implement the method for rejecting the paging as described in the above aspects when executed by a processor of a terminal or a network device.

The technical solution provided by embodiments of the present disclosure at least includes the following beneficial effects.

According to the method and the apparatus for rejecting the paging, the device and the storage medium provided in embodiments of the present disclosure, the terminal determines whether the network device supports the multi-card capability. The terminal determines to reject the paging message sent by the network device based on whether the network device supports the multi-card capability in a case that the terminal is in the communication state. Therefore, the method fully considers a situation of whether the network device supports the multi-card capability, and improves accuracy of the terminal rejecting the paging message.

### BRIEF DESCRIPTION OF THE DRAWINGS

In order to clearly illustrate the technical solution of the embodiments of the disclosure, a brief description of drawings used in the embodiments is given below. Obviously, the drawings in the following descriptions are only part of the embodiments of the disclosure, and for those skilled in the art, other drawings can be obtained according to these drawings without inventive works.
FIG. 1 is a schematic diagram illustrating a communication system provided in an exemplary embodiment of the present disclosure.
FIG. 2 is a flowchart illustrating a method for rejecting a paging provided in an exemplary embodiment of the present disclosure.
FIG. 3 is a flowchart illustrating a method for rejecting a paging provided in an exemplary embodiment of the present disclosure.
FIG. 4 is a flowchart illustrating a method for rejecting a paging provided in an exemplary embodiment of the present disclosure.
FIG. 5 is a flowchart illustrating a method for rejecting a paging provided in an exemplary embodiment of the present disclosure.
FIG. 6 is a block diagram illustrating an apparatus for rejecting a paging provided in an exemplary embodiment of the present disclosure.
FIG. 7 is a block diagram illustrating an apparatus for rejecting a paging provided in an exemplary embodiment of the present disclosure.
FIG. 8 is a schematic diagram illustrating a structure of a communication device provided in an exemplary embodiment of the present disclosure.

### DETAILED DESCRIPTION

In order to make the purpose, the technical solution, and the advantages of the present disclosure clearer, the following will further describe embodiments of the present disclosure in detail with the accompanying drawings.

Application scenarios of the present disclosure will be explained below.

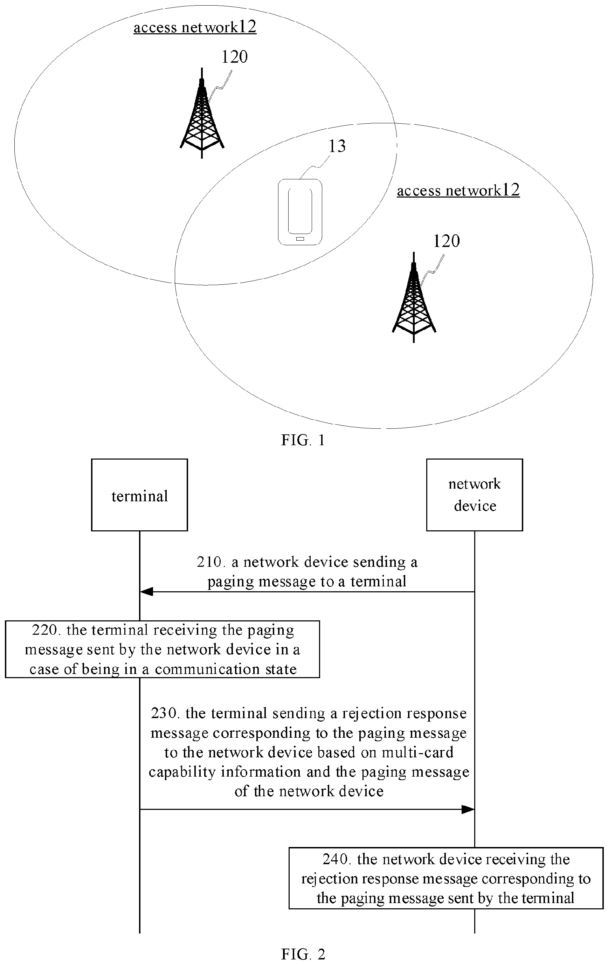

FIG. 1 is a schematic diagram illustrating a communication system provided in an exemplary embodiment of the present disclosure. The communication system may include an access network 12 and a terminal 13.

The access network 12 includes several network devices 120. The network devices 120 may be base stations, which are devices deployed in the access network to provide a wireless communication function for the terminal. The base stations may include various forms of base stations, such as macro-base stations, micro-base stations, relay stations, access points. In systems using different wireless access technologies, devices with base station functionality may be described as different names, for example, called as an eNodeB or an eNB in an LTE system, or called as a gNodeB or a gNB in a 5G NR-U system. Description of the term "base station" may change with evolution of communication technology. For convenience, in embodiments of the present disclosure, the devices providing the wireless communication function for the terminal 13 are collectively referred to as the access network device.

The terminal 13 may include various kinds of devices with the wireless communication function, such as a handheld device, an on-board device, a wearable device, a computing device with the wireless communication function or other processing devices connected to a wireless modem, as well as various forms of user devices, such as, a mobile station (MS), a terminal device, and the like. For convenience of description, the devices mentioned above are collectively referred to as the terminal. The access network device 120 and the terminal 13 communicate with each other through a certain air interface technology, such as a Uu interface.

The technical solution of embodiments of the present disclosure can be applied to various communication systems, for example: a global system of mobile communication (GSM) system, a code division multiple access (CDMA) system, a wideband code division multiple access (WCDMA) system, a general packet radio service (GPRS) long term evolution (LTE) system, an LTE frequency division duplex (FDD) system, an LTE time division duplex (TDD) system, an advanced long term evolution (LTE-A) system, a new radio (NR) system, an evolution system of the NR system, an LTE-based access to unlicensed spectrum (LTE-U) system, an NR-U system, a universal mobile telecommunications system (UMTS), a worldwide interoperability for microwave access (WiMAX) communication system, a wireless local area networks (WLAN), Wireless Fidelity (Wi-Fi), a next-generation communication system, or other communication systems.

Generally, traditional communication systems support a limited number of connections and are easy to implement. However, with development of communication technology, a mobile communication system will not only support traditional communication, but also support, for example, a device to device (D2D) communication, a machine to machine (M2M) communication, a machine type communication (MTC), a vehicle to vehicle (V2V) communication and a vehicle to everything (V2X) system. Embodiments of the present disclosure can also be applied to the forgoing communication systems.

FIG. 2 is a flowchart illustrating a method for rejecting a paging provided in an exemplary embodiment of the present disclosure. The method may be applicable for the terminal and the network device as illustrated in FIG. 1, and includes at least some of the following contents.

210. A network device sends a paging message to a terminal.

220. The terminal receives the paging message sent by the network device in a case of being in a communication state.

The terminal supports a multi-card capability, that is, the terminal is installed with a plurality of cards and communicates with the network device based on any card. The card in embodiment of the present disclosure may be a SIM (subscriber identity module) card, a USIM (universal subscriber identity module) card, an eSIM (embedded subscriber identity module) card, or other cards for communication, which will not be limited in embodiments of the present disclosure. The plurality of cards in the terminal may correspond to a same operator, or correspond to different operators.

In some embodiments, the terminal being in the communication state includes a situation where the terminal supports the plurality of cards, and the terminal is in the communication state in a case that a first card among the plurality of cards communicates with the network device. For example, the terminal is installed with a first SIM card and a second SIM card, and it is represented that the terminal is in the communication state when the terminal communicates through the first SIM card or the second SIM card.

In some embodiments, in the case that the terminal communicates with the network device based on the first card, the network device sends the paging message to cards other than the first card among the plurality of cards, and the terminal receives the paging message sent by the network device based on the cards other than the first card among the plurality of cards.

Description will be made by taking the cards being the SIM cards as an example, the terminal includes a first SIM card or a second SIM card. In a case that the terminal communicates with the network device through the first SIM card at this time, the terminal is in the communication state, and the network device may also send the paging message to the second SIM card of the terminal, and the terminal receives the paging message based on the second SIM card.

In embodiments of the present disclosure, in a case of the terminal being in the communication state, the network device sends the paging message to the terminal to page the terminal. The terminal receives the paging message sent by the network device, and determines whether to reject the paging message in the subsequent method.

In some embodiments, the paging message includes a paging cause. The paging cause is configured to indicate a cause for the network device to send the paging message, in order to inform the terminal of a type of a service corresponding to the present paging.

Optionally, the paging cause includes a voice service or a non-voice service.

The voice service refers to a service of voice calls between the terminal and other terminals. The non-voice service includes a mobile data service, an SMS sending services, or other services, which will not be limited in embodiments of the present disclosure.

In some embodiments, the paging message includes indication information, configured to indicate a paging cause for the paging message sent by the network device. The indication information may be configured by the network device or by other means.

In some embodiments, the indication information is represented by a paging cause value. For example, when the paging cause value is a voice value, it represents that the paging cause is for the voice service. Alternatively, when the paging cause value is a non-voice value, it represents that the paging cause is for the non-voice service. Alternatively, when the paging message does not include the paging cause value, it represents that the paging cause is for the non-voice service.

It should be noted that the above embodiment is described only based on the example of the paging cause indicated by the indication information. In another embodiment, in a case that the network device supports a multi-card capability, the network device may add the indication information into the paging message to indicate the paging cause. However, in a case that the network device does not support the multi-card capability, the paging message sent by the network device does not include the paging cause.

230. The terminal sending a rejection response message corresponding to the paging message to the network device based on multi-card capability information and the paging message of the network device.

The multi-card capability information is configured to indicate whether the network device supports the multi-card capability. The terminal device may determine whether the network device supports the multi-card capability based on the multi-card capability information.

In some embodiments, the multi-card capability message indicates whether the network device supports the multi-card capability by means of a preset number of bits.

The preset number is set by network device, an operator, or other methods. For example, the preset number is 1, 2, 3, or other numerical values.

For example, when the preset number of bits is 1 bit, it indicates that the network device supports the multi-card capability in response to the multi-card capability information including a first identifier, while it indicates that the network device does not support the multi-card capability in response to the multi-card capability information including a second identifier. For example, the first identifier is 1, and the second identifier is 0, alternatively, the first identifier is 0 and the second identifier is 1.

It should be noted that embodiments of the present disclosure are described only based on the example of directly indicating whether the network device supports the multi-card capability through the multi-card capability information. In another embodiment, the multi-card capability information may indirectly indicate whether the network device supports the multi-card capability by including other information.

In some embodiments, the multi-card capability information includes a paging cause, configured to indicate that the network device supports the multi-card capability.

In some embodiments, the multi-card capability information includes identifier information of the paging cause, configured to indicate whether the network device supports the paging cause, and further indicate whether the network device supports the multi-card capability. When the network device supports the paging cause, it indicates that the network device supports the multi-card capability, while when the network device does not support the paging cause, it indicates that the network device does not support the multi-card capability.

For example, when the identifier information included in the multi-card capability information is 0, it indicates that the network device supports the paging cause, and further indicates that the network device supports the multi-card capability. When the identifier information included in the multi-card capability information is 1, it indicates that the network device does not support the paging cause, and further indicates that the network device does not support the multi-card capability.

In some embodiments, when the multi-card capability information includes the paging cause, it indicates that the network device supports the multi-card capability. Furthermore, the paging cause is similar to the paging cause in step 220 above, and will not be repeated herein.

In some embodiments, the paging cause included in the multi-card capability information is indicated by pre-configured instruction information, which is similar to the instruction information in step 220 above and will not be repeated herein.

In some embodiments, the multi-card capability information also includes at least one of busy indication information, filtering information, and multi-card capability leaving information.

The busy indication information is configured to indicate that the terminal is in a busy state. For example, when the terminal is in the communication state, the network device sends the paging message to the terminal. At this case, the terminal sends the busy indication message to the network device to inform the network device that the terminal is currently busy and does not accept the paging message.

The multi-card capability leaving information is configured to indicate leaving a current service. For example, when the terminal is in the communication state, the network device sends the paging message to the terminal. At this case, the terminal is required to accept the paging message, then the terminal sends the multi-card capability leaving message to the network device to inform the network device that the terminal leaves a communication state of the current service and accepts the paging message.

The filtering information is configured to indicate filtering a corresponding paging service. For example, after the terminal sends the filtered information, the network device determines a type of paging service that the terminal does not accept based on the filtered information. The network device may first determine whether the paging message to be sent belongs to a range of the filtered information when it is required to send the paging message to the terminal. The network device may not send the paging message to the terminal in response to determining that the paging message belongs to the range of the filtered information, and may send the paging message to the terminal in response to determining that the paging message belongs to the range of the filtered information.

In embodiments of the present disclosure, the terminal receives the multi-card capability information sent by the network device, determines whether the network device supports the multi-card capability based on the multi-card capability information, and then sends the rejection response message corresponding to the paging message to the network device based on the multi-card capability information and the paging message of the network device.

The following will explain the method of how to determine the rejection response message based on the multi-card capability information and the paging cause.
(1) The rejection response message corresponding to the paging message is sent to the network device in response to the multi-card capability information including that the network device supports the multi-card capability, and the paging message not including the paging cause.
   The terminal determines, based on the multi-card capability information, that the network device supports the multi-card capability, and the paging message does not include the paging cause. Then, the terminal determines with no need of responding to the paging message, which may also be understood as that the received paging message has a low important level and send the rejection response message corresponding to the paging message to the network device.
(2) The rejection response message corresponding to the paging message is sent to the network device in response to the multi-card capability information including that the network device supports the multi-card capability, and the paging cause for the paging message being a non-voice service.
   The terminal determines that, based on the multi-card capability information, the network device supports the multi-card capability and the paging cause for the paging message is the non-voice service. This indicates that the terminal does not need to respond to the paging message, which may also be understood that the non-voice service has a low important level and send the rejection response message corresponding to the paging message to the network device.
(3) The rejection response message corresponding to the paging message is sent to the network device in response to the multi-card capability information including that the network device does not support the multi-card capability.

The terminal determines that the network device does not support the multi-card capability based on the multi-card capability information. In this case, even if the network device sends the paging message, the terminal will directly reject the paging message and send the rejection response message corresponding to the paging message to the network device.

It should be noted that embodiments of the present disclosure are described only based on the example that the terminal determines the rejection response message based on the multi-card capability information and the paging message. In other embodiments, the rejection response message corresponding to the paging message may sent to the network device based on the multi-card capability information, the paging message, and service information currently processed.

In some embodiments, the rejection response message corresponding to the paging message is sent to the network device in response to the multi-card capability information including that the network device supports the multi-card capability, and a priority level of the paging message being lower than a priority level of the service information.

The terminal determines, based on the multi-card capability information, that the network device supports the multi-card capability, and the priority level of the paging message is lower than the priority level of the service information, which indicates that the service information currently processed is more important than the service information included in the paging message. In this case, it indicates that the terminal does not need to respond to the paging message, and sends the rejection response message corresponding to the paging message to the network device.

For example, a priority level of the voice service is higher than a priority level of the non-voice service. In response to the service corresponding to the paging message being the non-voice service, and the service information currently processed being the voice service, the terminal determines the rejection response message corresponding to the paging message, and subsequently sends a rejection voice message to the network device.

In other embodiments, the rejection response message corresponding to the paging message is sent to the network device in response to the multi-card capability information including that the network device does not support the multi-card capability, and the priority level of the paging message being lower than the priority level of the service information.

The terminal determines, based on the multi-card capability information, that the network device does not support multi-card capability, and the priority level of the paging message is lower than the priority level of the service information, which indicates that the service information currently processed is more important than the service information included in the paging message. In this case, it indicates that the terminal does not need to respond to the paging message, and sends the rejection response message corresponding to the paging message to the network device.

240. The network device receives the rejection response message corresponding to the paging message sent by the terminal.

After receiving the reject response message, the network device determines that the terminal will not respond to the paging message at this time, and the network device stops continuing to page the terminal.

It should be noted that embodiments of the present disclosure are described only based on an example of the terminal sending the rejection response message corresponding to the paging message to the network device. In another embodiment, the terminal may also send an acceptance response message corresponding to the paging message to the network device.

In some embodiments, the acceptance response message corresponding to the paging message is sent to the network device in response to the multi-card capability information including that the network device supports the multi-card capability, and the paging message including the paging cause.

The terminal determines, based on the multi-card capability information, that the network device supports the multi-card capability, and the paging message includes the paging cause. The terminal determines to respond to the paging message, which may also be understood as that the received paging message has a high important level, and sends the acceptance response message corresponding to the paging message to the network device.

In other embodiments, the acceptance response message corresponding to the paging message is sent to the network device in response to the multi-card capability information including that the network device supports the multi-card capability, and the paging cause for the paging message being a voice service.

The terminal determines, based on the multi-card capability information, that the multi-card capability information includes that the network device supports the multi-card capability, and the paging cause for the paging message is the voice service. It indicates that the terminal is required to respond to the paging message, which may also be understood as that the voice service has the high important level, and sends the acceptance response message corresponding to the paging message to the network device.

In other embodiments, the terminal sends the acceptance response message corresponding to the paging message to the network device in response to the multi-card capability information including that the network device supports the multi-card capability, and the priority level of the paging message being higher than the priority level of the service information.

The terminal determines, based on the multi-card capability information, that the network device supports the multi-card capability, and the priority level of the paging message being higher than the priority level of the service information, which indicates that the service information included in the paging message is more important than the service information currently processed. At this time, it indicates that the terminal is required to respond to the paging message, and sends the acceptance response message corresponding to the paging message to the network device.

According to the method provided in embodiments of the present disclosure, the terminal determines whether the network device supports the multi-card capability. The terminal determines to reject the paging message sent by the network device based on whether the network device supports the multi-card capability in a case that the terminal is in the communication state. Therefore, the method fully considers a situation of whether the network device supports the multi-card capability, and improves accuracy of the terminal rejecting the paging message.

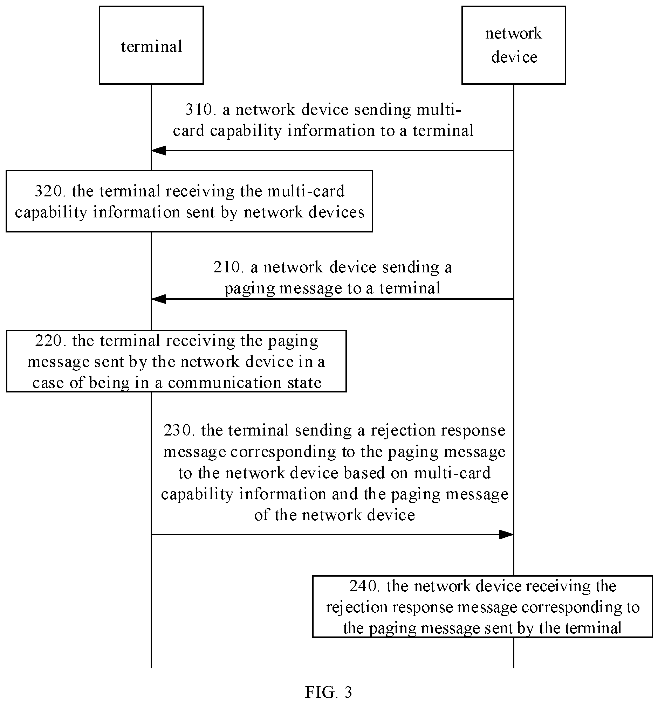

On the basis of the embodiment illustrated in FIG. 2, FIG. 3 is a flowchart illustrating a method for rejecting a paging provided in an exemplary embodiment of the present disclosure. The method may be applicable for the terminal and the network device as illustrated in FIG. 1, and includes at least some of the following contents.

3 10. A network device sends multi-card capability information to a terminal.

320. The terminal receives the multi-card capability information sent by network devices.

In some embodiments, the network device is a base station. The base station sends a system broadcast message to the terminal, and the terminal receives the system broadcast message sent by the base station. The system broadcast message includes the multi-card capability information.

In a case of the network device being the base station, the base station sends the corresponding multi-card capability information to the terminal by means of broadcasting in response to the terminal being within a communication range of the base station.

For example, the base station carries the multi-card capability message in the system broadcast message and sends the system broadcast message to the terminal.

In some embodiments, the network device is a core network device. The core network device sends a core network signaling to the terminal, and the terminal receives the core network signaling sent by the core network device. The core network signaling includes the multi-card capability information.

In some embodiments, the terminal may receive the core network signaling sent by core network devices through a non-access layer (NAS) signaling.

In a case of the network device being the core network device, the core network device determines whether each base station supports the multi-card capability, and then sends the determined multi-card capability information to the terminal, enabling the terminal to determine whether the base station supports the multi-card capability.

In some embodiments, the core network device is an AMF (access and mobility management function) network element, or an SMF (session management function) network element, or another type of network element.

In some embodiments, the multi-card capability information includes at least one of: whether a cell supports the multi-card capability, whether the base station supports multi-card capability, and whether the core network device supports the multi-card capability.

In embodiments of the present disclosure, the multi-card capability information sent by network devices has different granularity. For example, when the multi-card capability information includes whether the cell supports the multi-card capability, it indicates that the multi-card capability information belongs to a cell granularity. When the multi-card capability information includes whether the base station supports the multi-card capability, it indicates that the multi-card capability information belongs to a base station granularity. The multi-card capability information includes whether the core network device supports the multi-card capability, it indicates that multi-card capability belongs to the core network granularity. Regardless of the granularity of the multi-card capability information, after receiving the multi-card capability information, the terminal determines whether the network device supports the multi-card capability, alternatively, the multi-card capability information sent by the network device may further include a plurality of granularities.

According to the method provided in embodiments of the present disclosure, the network device sends the multi-card capability information to the terminal device to inform the terminal that whether the network device supports the multi-card capability, and then the terminal determines the rejection response message corresponding to the paging message based on whether the network device supports the multi-card capability. Therefore, the method not only improves timeliness of the terminal obtaining whether the network device supports the multi-card capability, but also improves accuracy of the terminal rejecting the paging message sent by the network device.

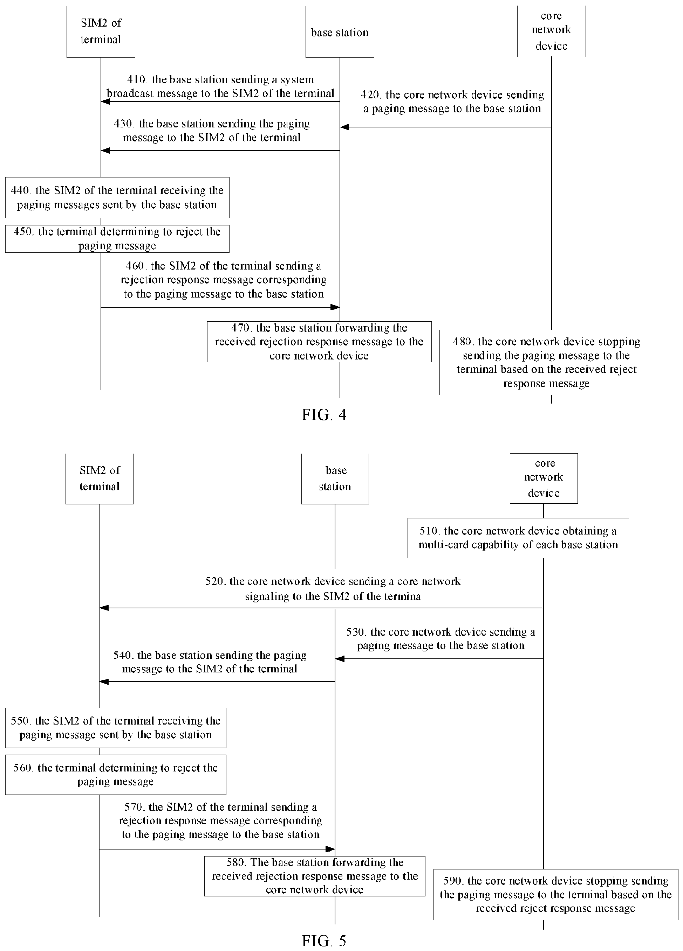

The following is described by taking sending multi-card capability information from a base station to a terminal for example. As illustrated in FIG. 4, the method is applicable for the terminal, the base station, and a core network device. The terminal includes SIM1 and SIM2, and is in a state of communication through SIM1. The method includes the following block.

410. The base station sends a system broadcast message to the SIM2 of the terminal. The system broadcast message includes multi-card capability information.

In embodiments of the present disclosure, when a network device is the base station and the SIM1 of the terminal is in a communication state, the base station sends the system broadcast message to the SIM2 of the terminal to inform the terminal whether the base station supports the multi-card capability.

420. The core network device sends a paging message to the base station. The paging message includes a paging cause.

430. The base station sends the paging message to the SIM2 of the terminal.

In an embodiment of the present disclosure, the core network device determines to page the SIM2 of the terminal. In this case, the core network device sends the paging message to the base station, and further sends the paging message to the SIM2 of the terminal through the base station.

440. The SIM2 of the terminal receives the paging messages sent by the base station.

450. The terminal determines to reject the paging message.

The method by which the terminal determines to reject the paging message is similar to step 240 in the above embodiment, and will not be repeated here.

460. The SIM2 of the terminal sends a rejection response message corresponding to the paging message to the base station.

470. The base station forwards the received rejection response message to the core network device.

480. The core network device stops sending the paging message to the terminal based on the received reject response message.

According to the method provided in embodiments of the present disclosure, the base station sends the multi-card capability information to the terminal device to inform the terminal that whether the network device supports the multi-card capability, and then the terminal determines the rejection response message corresponding to the paging message based on whether the network device supports the multi-card capability. Therefore, the method not only improves timeliness of the terminal obtaining whether the network device supports the multi-card capability, but also improves accuracy of the terminal rejecting the paging message sent by the network device.

The following is described by taking sending multi-card capability information from a core network device to a terminal. As illustrated in FIG. 5, the method is applicable for the terminal, a base station, and the core network device. The terminal includes SIM1 and SIM2, and is in a state of communication through the SIM1. The method includes the following block.

5 10. The core network device obtains a multi-card capability of each base station.

520. The core network device sends a core network signaling to the SIM2 of the terminal. The core network signaling includes multi-card capability information.

530. The core network device sends a paging message to the base station. The paging message includes a paging cause.

540. The base station sends the paging message to the SIM2 of the terminal.

550. The SIM2 of the terminal receives the paging message sent by the base station.

560. The terminal determines to reject the paging message.

570. The SIM2 of the terminal sends a rejection response message corresponding to the paging message to the base station.

580. The base station forwards the received rejection response message to the core network device.

590. The core network device stops sending the paging message to the terminal based on the received reject response message.

A difference between the embodiment of FIG. 5 and the embodiment of FIG. 4 is that the embodiment of FIG. 4 sends the multi-card capability information to the terminal through the base station, while the embodiment of FIG. 5 sends the multi-card capability information to the terminal by the core network device.

According to the method provided in embodiments of the present disclosure, the core network device sends the multi-card capability information to the terminal device to inform the terminal that whether the network device supports the multi-card capability, and then the terminal determines the rejection response message corresponding to the paging message based on whether the network device supports the multi-card capability. Therefore, the method not only improves timeliness of the terminal obtaining whether the network device supports the multi-card capability, but also improves accuracy of the terminal rejecting the paging message sent by the network device.

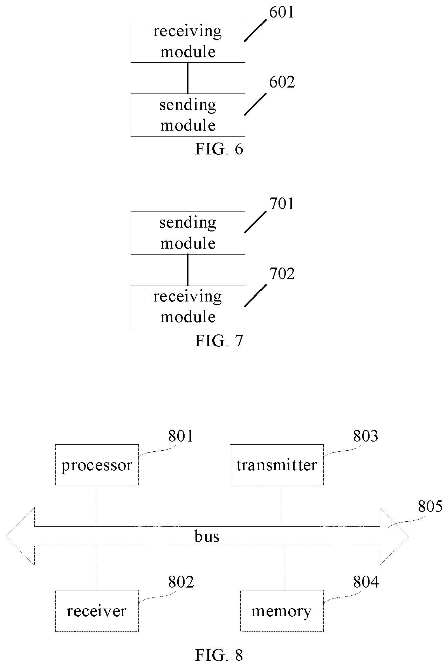

FIG. 6 is a block diagram illustrating an apparatus for rejecting a paging provided in an exemplary embodiment of the present disclosure. The apparatus is provided in a terminal supporting a multi-card capability, and includes:
a receiving module 601, configured to receive a paging message sent by a network device in a case of the terminal being in a communication state; and
a sending module 602, configured to send a rejection response message corresponding to the paging message to the network device based on multi-card capability information and the paging message of the network device, in which the multi-card capability information is configured to indicate whether the network device supports a multi-card capability.

According to the apparatus provided in embodiments of the present disclosure, the terminal determines whether the network device supports the multi-card capability. The terminal determines to reject the paging message sent by the network device based on whether the network device supports the multi-card capability in a case that the terminal is in the communication state. Therefore, the method fully considers a situation of whether the network device supports the multi-card capability, and improves accuracy of the terminal rejecting the paging message.

In some embodiments, the receiving module 601 is configured to receive the multi-card capability information sent by the network device.

In some embodiments, the network device is a base station, and the receiving module 602 is configured to receive a system broadcast message sent by the base station, in which the system broadcast message includes the multi-card capability information.

In some embodiments, the network device is a core network device, and the receiving module 602 is configured to receive a core network signaling sent by the core network device, in which the core network signaling includes the multi-card capability information.

In some embodiments, the multi-card capability information includes at least one of: whether a cell supports the multi-card capability, whether the base station supports multi-card capability, and whether the core network device supports the multi-card capability.

In some embodiments, the multi-card capability information includes a paging cause, configured to indicate that the network device supports the multi-card capability.

In some embodiments, the multi-card capability information further includes at least one of busy indication information, filtering information, and multi-card capability leaving information;
the busy indication information is configured to indicate that the terminal is in a busy state, the multi-card capability leaving information is configured to indicate leaving a current service, and the filtering information is configured to indicate filtering a corresponding paging service.

In some embodiments, the paging message includes indication information, configured to indicate a paging cause for the paging message.

In some embodiments, the sending module 601 is configured to:
send the rejection response message corresponding to the paging message to the network device in response to the multi-card capability information including that the network device supports the multi-card capability, and the paging message not including the paging cause; or
send the rejection response message corresponding to the paging message to the network device in response to the multi-card capability information including that the network device supports the multi-card capability, and the paging cause for the paging message being a non-voice service; or
send the rejection response message corresponding to the paging message to the network device in response to the multi-card capability information including that the network device does not support the multi-card capability.

In some embodiments, the sending module 601 is configured to: send the rejection response message corresponding to the paging message to the network device based on the multi-card capability information, the paging message, and service information currently processed.

In some embodiments, the sending module 601 is configured to:
send the rejection response message corresponding to the paging message to the network device in response to the multi-card capability information including that the network device supports the multi-card capability, and a priority level of the paging message being lower than a priority level of the service information; or
send the rejection response message corresponding to the paging message to the network device in response to the multi-card capability information including that the network device does not support the multi-card capability, and the priority level of the paging message being lower than the priority level of the service information.

In some embodiments, the terminal supports a plurality of cards;
the terminal is in the communication state in a case that a first card among the plurality of cards communicates with the network device;
in which in the case that the first card among the plurality of cards communicates with the network device, the receiving module is configured to receive the paging message sent by the network device based on cards other than the first card among the plurality of cards.

FIG. 7 is a block diagram illustrating an apparatus for rejecting a paging provided in an exemplary embodiment of the present disclosure. The apparatus is provided in a network device, and includes:
a sending module 701, configured to send a paging message to a terminal in a case of the terminal being in a communication state, in which the terminal supports a multi-card capability; and
a receiving module 702, configured to receive a rejection response message corresponding to the paging message sent by the terminal, in which the rejection response message is determined by the terminal based on multi-card capability information of the network device and the paging message, the multi-card capability information is configured to indicate whether the network device supports the multi-card capability.

According to the apparatus provided in embodiments of the present disclosure, the terminal determines whether the network device supports the multi-card capability. The terminal determines to reject the paging message sent by the network device based on whether the network device supports the multi-card capability in a case that the terminal is in the communication state. Therefore, the method fully considers a situation of whether the network device supports the multi-card capability, and improves accuracy of the terminal rejecting the paging message.

In some embodiments, the sending module 701 is configured to send the multi-card capability information to the terminal.

In some embodiments, the network device is a base station, and the sending module is configured to send, by the base station, a system broadcast message to the terminal, in which the system broadcast message includes the multi-card capability information.

In some embodiments, the network device is a core network device and the sending module 701 is configured to send, by the core network device, a core network signaling to the terminal, in which the core network signaling includes the multi-card capability information.

In some embodiments, the multi-card capability information includes at least one of: whether a cell supports the multi-card capability, whether the base station supports multi-card capability, and whether the core network device supports the multi-card capability.

In some embodiments, the multi-card capability information includes a paging cause, configured to indicate that the network device supports the multi-card capability.

In some embodiments, the multi-card capability information further includes at least one of busy indication information, filtering information, and multi-card capability leaving information;

the busy indication information is configured to indicate that the terminal is in a busy state, the multi-card capability leaving information is configured to indicate leaving a current service, and the filtering information is configured to indicate filtering a corresponding paging service.

In some embodiments, in which the paging message includes indication information, configured to indicate a paging cause for the paging message.

In some embodiments, the terminal supports a plurality of cards;
the terminal is in the communication state in a case that a first card among the plurality of cards communicates with the network device;
in which in the case that the first card among the plurality of cards communicates with the network device, the sending module is configured to send the paging message to cards other than the first card among the plurality of cards.

FIG. 8 is a schematic diagram illustrating a structure of a communication device provided in an exemplary embodiment of the present disclosure. The communication device includes a processor 801, a receiver 802, a transmitter 803, a memory 804, and a bus 805.

The processor 801 includes one or more processing cores. The processor 801 execute various functional applications and information processing by running software programs and modules.

The receiver 802 and the transmitter 803 may be implemented as a communication component. The communication component may be a communication chip.

The memory 804 is couple to the processor 801 through the bus 805.

The memory 804 may be configured to store at least one program code, and configured to execute the at least one program code to implement the steps in the above method embodiments.

In addition, the communication devices may be a terminal or a network device. The memory 804 may be implemented by any type of volatile or non-volatile storage device, or their combination. The volatile or non-volatile storage device includes, but is not limited to, a magnetic disk or an optical disk, an electrically erasable programmable read-only memory (EEPROM), an erasable programmable read-only memory (EPROM), a static anytime access memory (SRAM), a read-only memory (ROM), a magnetic memory, a flash memory, a programmable read-only memory (PROM).

In an exemplary embodiment, the present disclosure also provides a computer-readable storage medium. The readable storage medium has executable program codes stored thereon is provided. When the executable program codes are loaded and executed by a processor, the method for rejecting the paging executed by a communication device in each of the above method embodiments is implemented.

In an exemplary embodiment, the present disclosure also provides a chip. The chip includes programmable logic circuits and/or program instructions, and is configured to implement the method for rejecting the paging as described in each of the above method embodiments when running on a terminal or a network device.

In an exemplary embodiment, the present disclosure also provides a computer program product. The computer program product is configured to implement the method for rejecting the paging as described in each of the above method embodiments when executed by a processor of a terminal or a network device.

Those skilled in the art can understand that implementations of all or part of the steps of the above embodiments can be completed by hardware, or by instructing relevant hardware through programs. The programs can be stored in a computer-readable storage medium, which can be a read-only memory, a magnetic disk, or an optical disk, etc.

The above embodiments are only optional embodiments of the present disclosure and are not intended to limit the present disclosure. Any modifications, equivalent substitutions, improvements, etc. made within the spirit and principles of the present disclosure should be included in the scope of protection of the present disclosure.

## Claims

1. A method for rejecting a paging, applicable for a terminal supporting a multi-card capability, comprising:
receiving a paging message sent by a network device in a case of being in a communication state; and
sending a rejection response message corresponding to the paging message to the network device based on multi-card capability information and the paging message of the network device, wherein the multi-card capability information is configured to indicate whether the network device supports a multi-card capability.

2. The method according to claim 1, further comprising:
receiving the multi-card capability information sent by the network device.

3. The method according to claim 2, wherein the network device is a base station, and receiving the multi-card capability information sent by the network device comprises:
receiving a system broadcast message sent by the base station, wherein the system broadcast message comprises the multi-card capability information.

4. The method according to claim 2, wherein the network device is a core network device, and receiving the multi-card capability information sent by the network device comprises:
receiving a core network signaling sent by the core network device, wherein the core network signaling comprises the multi-card capability information.

5. The method according to claim 3 or 4, wherein the multi-card capability information comprises at least one of: whether a cell supports the multi-card capability, whether the base station supports multi-card capability, and whether the core network device supports the multi-card capability.

6. The method according to any one of claims 1 to 5, wherein the multi-card capability information comprises a paging cause, configured to indicate that the network device supports the multi-card capability.

7. The method according to claim 6, wherein the multi-card capability information further comprises at least one of busy indication information, filtering information, and multi-card capability leaving information;
the busy indication information is configured to indicate that the terminal is in a busy state, the multi-card capability leaving information is configured to indicate leaving a current service, and the filtering information is configured to indicate filtering a corresponding paging service.

8. The method according to any one of claims 1 to 7, wherein the paging message comprises indication information, configured to indicate a paging cause for the paging message.

9. The method according to any one of claims 1 to 8, wherein sending the rejection response message corresponding to the paging message to the network device based on multi-card capability information and the paging message of the network device comprises:
sending the rejection response message corresponding to the paging message to the network device in response to the multi-card capability information comprising that the network device supports the multi-card capability, and the paging message not comprising the paging cause; or
sending the rejection response message corresponding to the paging message to the network device in response to the multi-card capability information comprising that the network device supports the multi-card capability, and the paging cause for the paging message being a non-voice service; or
sending the rejection response message corresponding to the paging message to the network device in response to the multi-card capability information comprising that the network device does not support the multi-card capability.

10. The method according to any one of claims 1 to 9, wherein sending the rejection response message corresponding to the paging message to the network device based on multi-card capability information and the paging message of the network device comprises:
sending the rejection response message corresponding to the paging message to the network device based on the multi-card capability information, the paging message, and service information currently processed.

11. The method according to claim 10, wherein sending the rejection response message corresponding to the paging message to the network device based on the multi-card capability information, the paging message, and the service information currently processed comprises:
sending the rejection response message corresponding to the paging message to the network device in response to the multi-card capability information comprising that the network device supports the multi-card capability, and a priority level of the paging message being lower than a priority level of the service information; or
sending the rejection response message corresponding to the paging message to the network device in response to the multi-card capability information comprising that the network device does not support the multi-card capability, and the priority level of the paging message being lower than the priority level of the service information.

12. The method according to any one of claims 1 to 11, wherein the terminal supports a plurality of cards;
the terminal is in the communication state in a case that a first card among the plurality of cards communicates with the network device;
wherein in the case that the first card among the plurality of cards communicates with the network device, receiving the paging message sent by the network device comprises:
receiving the paging message sent by the network device based on cards other than the first card among the plurality of cards.

13. A method for rejecting a paging, applicable for a network device, comprising:
sending a paging message to a terminal in a case of the terminal being in a communication state, wherein the terminal supports a multi-card capability; and
receiving a rejection response message corresponding to the paging message sent by the terminal, wherein the rejection response message is determined by the terminal based on multi-card capability information of the network device and the paging message, the multi-card capability information is configured to indicate whether the network device supports the multi-card capability.

14. The method according to claim 13, further comprising:
sending the multi-card capability information to the terminal.

15. The method according to claim 14, wherein the network device is a base station, and sending the multi-card capability information to the terminal comprises:
sending, by the base station, a system broadcast message to the terminal, wherein the system broadcast message comprises the multi-card capability information.

16. The method according to claim 14, wherein the network device is a core network device and sending the multi-card capability information to the terminal comprises:
sending, by the core network device, a core network signaling to the terminal, wherein the core network signaling comprises the multi-card capability information.

17. The method according to claim 15 or 16, wherein the multi-card capability information comprises at least one of: whether a cell supports the multi-card capability, whether the base station supports multi-card capability, and whether the core network device supports the multi-card capability.

18. The method according to any one of claims 13 to 17, wherein the multi-card capability information comprises a paging cause, configured to indicate that the network device supports the multi-card capability.

19. The method according to claim 18, wherein the multi-card capability information further comprises at least one of busy indication information, filtering information, and multi-card capability leaving information;
the busy indication information is configured to indicate that the terminal is in a busy state, the multi-card capability leaving information is configured to indicate leaving a current service, and the filtering information is configured to indicate filtering a corresponding paging service.

20. The method according to any one of claims 13 to 19, wherein the paging message comprises indication information, configured to indicate a paging cause for the paging message.

21. The method according to any one of claims 13 to 20, wherein the terminal supports a plurality of cards;
the terminal is in the communication state in a case that a first card among the plurality of cards communicates with the network device;
wherein in the case that the first card among the plurality of cards communicates with the network device, sending the paging message to the terminal comprises:
sending the paging message to cards other than the first card among the plurality of cards.

22. An apparatus for rejecting a paging, provided in a terminal supporting a multi-card capability, comprising:
a receiving module, configured to receive a paging message sent by a network device in a case of the terminal being in a communication state; and
a sending module, configured to send a rejection response message corresponding to the paging message to the network device based on multi-card capability information and the paging message of the network device, wherein the multi-card capability information is configured to indicate whether the network device supports a multi-card capability.

23. The apparatus according to claim 22, wherein the receiving module is configured to receive the multi-card capability information sent by the network device.

24. The apparatus according to claim 23, wherein the network device is a base station, and the receiving module is configured to receive a system broadcast message sent by the base station, wherein the system broadcast message comprises the multi-card capability information.

25. The apparatus according to claim 24, wherein the network device is a core network device, and the receiving module is configured to receive a core network signaling sent by the core network device, wherein the core network signaling comprises the multi-card capability information.

26. The apparatus according to claim 24 or 25, wherein the multi-card capability information comprises at least one of: whether a cell supports the multi-card capability, whether the base station supports multi-card capability, and whether the core network device supports the multi-card capability.

27. The apparatus according to any one of claims 22 to 26, wherein the multi-card capability information comprises a paging cause, configured to indicate that the network device supports the multi-card capability.

28. The apparatus according to claim 27, wherein the multi-card capability information further comprises at least one of busy indication information, filtering information, and multi-card capability leaving information;
the busy indication information is configured to indicate that the terminal is in a busy state, the multi-card capability leaving information is configured to indicate leaving a current service, and the filtering information is configured to indicate filtering a corresponding paging service.

29. The apparatus according to any one of claims 22 to 28, wherein the paging message comprises indication information, configured to indicate a paging cause for the paging message.

30. The apparatus according to any one of claims 22 to 29, wherein the sending module is configured to:
send the rejection response message corresponding to the paging message to the network device in response to the multi-card capability information comprising that the network device supports the multi-card capability, and the paging message not comprising the paging cause; or
send the rejection response message corresponding to the paging message to the network device in response to the multi-card capability information comprising that the network device supports the multi-card capability, and the paging cause for the paging message being a non-voice service; or
send the rejection response message corresponding to the paging message to the network device in response to the multi-card capability information comprising that the network device does not support the multi-card capability.

31. The apparatus according to any one of claims 22 to 30, wherein the sending module is configured to: send the rejection response message corresponding to the paging message to the network device based on the multi-card capability information, the paging message, and service information currently processed.

32. The apparatus according to claim 31, wherein the sending module is configured to:
send the rejection response message corresponding to the paging message to the network device in response to the multi-card capability information comprising that the network device supports the multi-card capability, and a priority level of the paging message being lower than a priority level of the service information; or
send the rejection response message corresponding to the paging message to the network device in response to the multi-card capability information comprising that the network device does not support the multi-card capability, and the priority level of the paging message being lower than the priority level of the service information.

33. The apparatus according to any one of claims 22 to 32, wherein the terminal supports a plurality of cards;
the terminal is in the communication state in a case that a first card among the plurality of cards communicates with the network device;
wherein in the case that the first card among the plurality of cards communicates with the network device, the receiving module is configured to receive the paging message sent by the network device based on cards other than the first card among the plurality of cards.

34. An apparatus for rejecting a paging, provided in a network device, comprising:
a sending module, configured to send a paging message to a terminal in a case of the terminal being in a communication state, wherein the terminal supports a multi-card capability; and
a receiving module, configured to receive a rejection response message corresponding to the paging message sent by the terminal, wherein the rejection response message is determined by the terminal based on multi-card capability information of the network device and the paging message, the multi-card capability information is configured to indicate whether the network device supports the multi-card capability.

35. The apparatus according to claim 34, wherein the sending module is configured to send the multi-card capability information to the terminal.

36. The apparatus according to claim 35, wherein the network device is a base station, and the sending module is configured to send, by the base station, a system broadcast message to the terminal, wherein the system broadcast message comprises the multi-card capability information.

37. The apparatus according to claim 35, wherein the network device is a core network device, and the sending module is configured to send, by the core network device, a core network signaling to the terminal, wherein the core network signaling comprises the multi-card capability information.

38. The apparatus according to claim 36 or 37, wherein the multi-card capability information comprises at least one of: whether a cell supports the multi-card capability, whether the base station supports multi-card capability, and whether the core network device supports the multi-card capability.

39. The apparatus according to any one of claims 34 to 38, wherein the multi-card capability information comprises a paging cause, configured to indicate that the network device supports the multi-card capability.

40. The apparatus according to claim 39, wherein the multi-card capability information further comprises at least one of busy indication information, filtering information, and multi-card capability leaving information;
the busy indication information is configured to indicate that the terminal is in a busy state, the multi-card capability leaving information is configured to indicate leaving a current service, and the filtering information is configured to indicate filtering a corresponding paging service.

41. The apparatus according to any one of claims 34 to 40, wherein the paging message comprises indication information, configured to indicate a paging cause for the paging message.

42. The apparatus according to any one of claims 34 to 41, wherein the terminal supports a plurality of cards;
the terminal is in the communication state in a case that a first card among the plurality of cards communicates with the network device;
wherein in the case that the first card among the plurality of cards communicates with the network device, the sending module is configured to send the paging message to cards other than the first card among the plurality of cards.

43. A terminal, comprising:
a processor;
a transceiver coupled with the processor; and
a memory for storing program codes executable by the processor; wherein
the processor is configured to load and execute the program codes to implement the method for rejecting the paging of any one of claims 1 to 12.

44. A network device, comprising:
a processor;
a transceiver coupled with the processor; and
a memory for storing program codes executable by the processor; wherein
the processor is configured to load and execute the program codes to implement the method for rejecting the paging of any one of claims 13 to 21.

45. A computer-readable storage medium having executable program codes stored thereon, wherein when the executable program codes are loaded and executed by a processor, the method for rejecting the paging of any one of claims 1 to 21 is implemented.
